# DEMANDE DE BREVET EUROPEEN

(11) **EP 4 093 145 A1**
(43) Date de publication de la demande: **23.11.2022**
(21) Numéro de dépôt: 22168076.2
(22) Date de dépôt: 13.04.2022
(51) Int. Cl.: H04W 80/10, H04M 7/00, H04L 65/10, H04L 65/1073, H04L 65/1096, H04L 65/1069, H04M 3/42, H04Q 3/00, H04W 12/48

(54) **TERMINAL METTANT EN OEUVRE UN PROCÉDÉ DE COMMUNICATION, ET SERVEUR METTANT EN OEUVRE UN PROCÉDÉ D'ÉTABLISSEMENT D'UNE COMMUNICATION ENTRE DEUX TERMINAUX**

(30) Priorité: 21.05.2021 FR 2105348
(71) Demandeur: Orange, 92130 Issy-les-Moulineaux (FR)
(72) Inventeur: BOUVET, Bertrand, 92326 CHATILLON Cedex (FR)
(74) Mandataire: Cabinet Beau de Loménie

(57) **Abrégé**

Le procédé d'établissement d'une communication entre un premier et un deuxième terminal est mis en œuvre par un serveur (S) et comporte des étapes de :
- réception (E106), en provenance du premier terminal (T1) utilisant une première identité appelante (A), d'une requête comprenant une information sur une connexion (INFO) dudit premier terminal et un identifiant (ID) dudit premier terminal (T1);
- obtention (E108), à partir d'une base de données et en utilisant ledit identifiant (ID), d'un couple d'identités appelantes (A, Abis) dont une certifiée (A) et une non certifiée (Abis), le couple comprenant ladite première identité appelante (A) et une deuxième identité appelante (Abis) ;
- détermination (E110), à partir d'une desdites identités appelantes (A) et de l'information sur la connexion (INFO), d'un mode de connectivité dudit premier terminal (T1);
- détermination (E112), en fonction du mode de connectivité, d'un numéro routable (TSAN) sur lequel le premier terminal (T1) peut envoyer une communication audit serveur (S), le serveur étant configuré pour router la communication vers le deuxième terminal en présentant une identité appelante (Abis) dudit couple (A, Abis); et
- envoi (E114) dudit numéro routable (TSAN) audit premier terminal (T1).

## Description

### Technique antérieure

L'invention se rapporte au domaine général des télécommunications. Plus précisément, l'invention se rapporte à l'établissement d'une communication par un terminal en utilisant, selon un critère sélectionné par un utilisateur du terminal, une identité appelante certifiée ou une identité appelante non certifiée du terminal.

Des opérateurs téléphoniques proposent à leurs abonnés un service permettant à un terminal, selon un choix de l'utilisateur, d'émettre (ou de recevoir) des communications en utilisant une identité appelante certifiée, associée à un module d'authentification du terminal tel qu'une carte SIM ou eSIM (pour « Subscriber Identity Module » et « embedded SIM » en anglais), ou une identité appelante non certifiée.

Ce service est particulièrement intéressant pour un utilisateur en situation de télétravail ou en déplacement professionnel.

Ce service lui permet d'émettre des appels en utilisant son téléphone mobile tout en présentant au destinataire une identité appelante non certifiée du téléphone, qui correspond à un numéro professionnel par exemple un numéro fixe de son entreprise, et non pas l'identité appelante certifiée du téléphone mobile. Une application logicielle est installée sur le téléphone pour permettre l'émission des communications en utilisant l'identité appelante certifiée ou l'identité appelante non certifiée, selon un choix de l'utilisateur.

Un appel entrant destiné initialement au numéro de l'entreprise qui correspond à l'identité non certifiée du téléphone mobile peut être renvoyé vers l'identité certifiée du téléphone, l'utilisateur pouvant ainsi recevoir cet appel sur son téléphone mobile. En particulier, la présentation sur le téléphone mobile des appels émis à destination de l'identité certifiée peut être différente de la présentation des appels émis à destination de l'identité non certifiée du téléphone (c'est-à-dire les appels destinés initialement au numéro de l'entreprise et renvoyés vers l'identité certifiée du téléphone), par exemple en utilisant une sonnerie différente ou en affichant un fond d'écran différent. Une application logicielle est installée sur le téléphone pour gérer la présentation des appels en fonction de leurs destinations initiales.

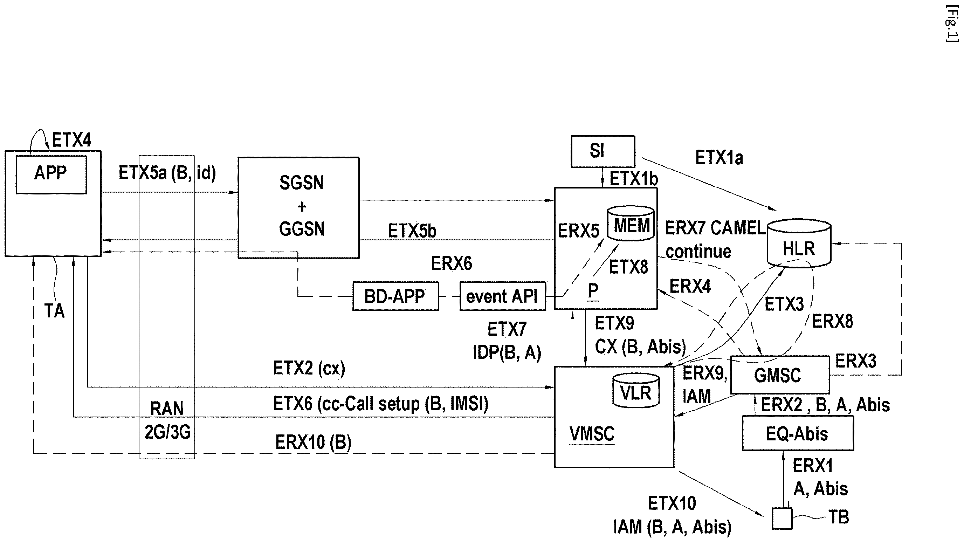

La figure 1 décrit une architecture d'un réseau de communication, dans lequel des méthodes de l'état de la technique sont mises en œuvre pour permettre à un terminal TA connecté au réseau en mode circuit d'émettre une communication en utilisant une identité appelante non certifiée Abis ou une identité appelante certifiée A, et pour permettre au terminal de recevoir une communication émise à destination de l'identité non certifiée Abis.

Le réseau illustré est un réseau cellulaire de deuxième ou troisième génération (2G ou 3G) et comporte un réseau d'accès cellulaire RAN (pour «Radio Access Network » en anglais). De façon connue, le réseau illustré comporte un équipement de type GGSN (pour « GPRS Gateway Service Node » en anglais), un équipement de type SGSN (pour « Serving Gateway Service Node » en anglais), un commutateur mobile visité de type V-MSC (pour « Visited Mobile Switch Center » en anglais) comprenant un module de type VLR (pour « Visited Location Register » en anglais), et un équipement comprenant une base de données de type HLR (pour « Home Location Register » en anglais). Pour mettre en œuvre le service, le réseau comporte en outre une plateforme P utilisant le protocole de réseau intelligent CAMEL (pour « Customised Applications for Mobile Network Enhanced Logic » en anglais) ou INAP (pour « Intelligent Network Application Part » en anglais), et une plateforme de gestion du service par l'opérateur, notée SI pour « Système d'Informations ».

Le terminal TA comporte un module d'authentification, par exemple une carte SIM ou eSIM, auquel l'identité appelante certifiée A est attribuée par l'opérateur du réseau, telle qu'une identité de type MSISDN (pour « Mobile Station International Subscriber Directory Number » en anglais). Le terminal TA peut être un téléphone mobile.

La base de données HLR et la plateforme P font partie du réseau nominal du terminal TA, c'est-à-dire le réseau géré par l'opérateur ayant attribué l'identité appelante certifiée A. Ce réseau nominal est désigné en anglais par le réseau « Home ». Le commutateur V-MSC peut être géré par l'opérateur du réseau nominal ou par un opérateur d'un réseau visité si le terminal TA se trouve en situation d'itinérance (« roaming » en anglais).

Des références numériques présentées sur la figure 1 illustrent des échanges entre les différents équipements du réseau, qui représentent des étapes ETXi d'une méthode de l'art antérieur permettant d'émettre des communications sortantes en utilisant l'identité appelante certifiée A ou l'identité appelante non certifiée Abis, et des étapes ERXj d'une méthode de l'art antérieur permettant de recevoir des communications entrantes destinées à l'identité non certifiée Abis.

### Emission par le terminal TA d'une communication en utilisant l'identité non certifiée Abis de ce terminal:

Au cours d'une étape ETX1a, la plateforme SI provisionne dans la base de données HLR une marque pour déclencher la plateforme P de réseau intelligent CAMEL mettant en œuvre le service pour les communications sortantes du terminal TA.

Au cours d'une étape ETX1b, la plateforme SI provisionne dans une base de données MEM accessible par la plateforme P l'identité appelante certifiée A du terminal mobile TA et l'identité appelante non certifiée Abis correspondant à un numéro fixe ou mobile avec lequel le terminal TA est autorisé à émettre une communication sortante et présenter cette identité Abis à un terminal appelé TB. D'autres informations peuvent également être provisionnées dans la plateforme SI par exemple pour autoriser ou non certaines destinations appelées, ou pour autoriser ou non l'usage de ce service certains jours de la semaine ou durant un créneau horaire donné.

Nous supposons que le terminal TA se connecte au réseau au cours d'une étape ETX2, par exemple suite à une mise en marche du terminal ou une désactivation d'un mode avion sur le terminal.

Au cours d'une étape ETX3, le module VLR du commutateur mobile V-MSC télécharge le profil attaché au module d'authentification du terminal TA à partir de la base de données HLR. Le module VLR obtient ainsi la marque de déclenchement de la plateforme P de réseau intelligent CAMEL pour les communications sortantes du terminal TA. Cette marque de déclenchement comporte en particulier :
- un point de déclenchement, par exemple de type IDP-2 (pour « Initial Détection Point - State 2 » en anglais), en référence à un automate d'appel de type O-BCSM (pour « Originating Basic Call State Machine » en anglais) standardisé et traité par le commutateur V-MSC ;
- une adresse de la plateforme P traitant le service ; et
- éventuellement le nom du service à exécuter par la plateforme P si elle traite plusieurs services.

Au cours d'une étape ETX4, l'utilisateur du terminal TA déclenche l'application logicielle dédiée au service, par exemple l'application « Orange Telephone Pro» de l'opérateur Orange en France (marques déposées). L'utilisateur sélectionne un module permettant d'émettre une communication sortante en utilisant l'identité appelante non certifiée Abis. L'utilisateur compose un numéro appelé B du terminal TB.

Au cours d'une étape ETX5a, l'application installée sur le terminal TA envoie une requête, par exemple de type HTTPS (pour « Hyper Text Transfer Protocol Secured » en anglais) vers la plateforme P, l'adresse de la plateforme P étant préconfigurée dans l'application. Cette requête contient le numéro appelé B et un identifiant technique permettant d'identifier le couple des identités A et Abis.

Suite à la réception de la requête, la plateforme P consulte la base de données MEM pour vérifier que le service est autorisé pour le terminal TA et que le numéro appelé B est autorisé. Si c'est le cas, la plateforme P envoie au cours d'une étape ETX5b une réponse positive à l'application, par exemple en lui envoyant un code HTTP de type 2XX. En outre, la plateforme P crée en anticipation un contexte de communication en enregistrant dans la base de données MEM le numéro appelant de la requête qui est dans cet exemple l'identité certifiée appelante A, en association avec le numéro appelé B et avec l'identité appelante non certifiée Abis.

Au cours d'une étape ETX6, l'application du terminal TA émet une communication sortante, en envoyant au commutateur V-MSC un message de type « Call Control Setup » comprenant le numéro appelé B et un identifiant technique associé à la carte SIM/eSIM du terminal TA, ce message étant un message de demande d'établissement d'une communication.

Au cours d'une étape ETX7, le commutateur V-MSC reçoit le message de type Call Control Setup, vérifie sur la base du profil obtenu dans le module VLR que les communications sortantes sont autorisées, puis déclenche la plateforme P de réseau intelligent puisque la marque de déclenchement est présente dans ledit profil. Le commutateur V-MSC envoie à la plateforme P un message de type IDP (pour « Initial Detection Point » en anglais) conforme au protocole CAMEL et contenant :
- l'identité appelante certifiée A obtenue du profil téléchargé (ETX3) de la base de données HLR lors de la phase d'attachement du terminal appelant TA au réseau;
- le numéro appelé B obtenu du message de type Call Control Setup ; et
- l'adresse de la plate-forme P et le nom du service obtenus du module VLR.

La demande d'établissement de la communication sortante reste en attente au niveau du commutateur V-MSC en attendant la réponse de la plateforme P.

Au cours d'une étape ETX8, la plateforme P de réseau intelligent CAMEL reçoit le message de type IDP, détecte la logique de service à appliquer à partir du nom du service contenu dans le message IDP, et consulte la base de données MEM pour rechercher la présence d'un contexte associé à l'identité appelante A et au numéro appelé B.

Comme le résultat de la recherche du contexte est positif, la plateforme P envoie au cours d'une étape ETX9 une commande CX de type CAMEL CONNECT au commutateur V-MSC, cette commande CX comportant un paramètre de type « Generic Number » égal à l'identité appelante non certifiée Abis, et le numéro appelé B.

Au cours d'une étape ETX10, le commutateur V-MSC reçoit la commande de type CAMEL CONNECT, traduit le message de demande d'établissement d'une communication en un message IAM (pour « Initial Address Message ») conforme au protocole ISUP/BICC (pour « ISDN Signalling User Part/Bearer-Independent Call Control » en anglais). Ce message IAM contient:
- le numéro appelé B dans un champ « Called Number »;
- l'identité appelante certifiée A dans un champ « Calling Party » ; et
- l'identité appelante non certifiée Abis dans un champ « Generic Number ».

Nous notons que les réglementations dans la majorité des pays, y compris la France, exigent que le numéro qui doit être restitué au niveau d'un terminal appelé est le numéro contenu dans le champ « Generic Number » et non pas dans le champ « Calling Party ». Lorsque le terminal TB associé au numéro appelé B reçoit la communication, il restitue, en tant que numéro appelant, l'identité appelante non certifiée Abis contenue dans le champ « Generic Number ».

### Emission par le terminal TA d'une communication en utilisant l'identité certifiée A de ce terminal :

Si l'utilisateur du terminal TA choisit au cours de l'étape ETX4 en utilisant l'application installée sur le terminal, d'émettre une communication en utilisant l'identité appelante certifiée A, l'application ne met pas en œuvre l'étape ETX5a et n'envoie pas de requête. La plateforme P ne trouvant pas de pré-contexte au cours de l'étape ETX8, répond au commutateur V-MSC au cours de l'étape ETX9 avec un message de type CAMEL Continue. Ainsi le commutateur V-MSC insère au cours de l'étape ETX10 dans le message IAM de demande d'établissement de communication l'identité appelante certifiée A dans les champs « Generic Number » et « Calling Number » et le numéro appelé B dans le champ « Called Number ».

### Réception par le terminal TA d'une communication destinée à son identité non certifiée Abis :

Le réseau illustré par la figure 1 comporte en outre un équipement EQ-Abis du réseau de l'opérateur gérant l'identité non certifiée Abis, un équipement de type GMSC (pour « Gateway Mobile Switch Center » en anglais) du réseau nominal de l'identité certifiée A du terminal TA, et un équipement gérant une fonction de type « Event APl» connecté à au moins un système de notification BD-APP propriétaire d'un fournisseur de système d'opération des terminaux mobiles, tels que les fournisseurs APNS (pour « Apple Push Notification Service ») et Firebase gérant respectivement les systèmes d'opérations mobiles Apple et Google (marques déposées).

Au cours d'une étape ERX1, le terminal TB émet un message M1 de demande d'établissement d'une communication destinée au numéro Abis. La communication est routée selon l'état de la technique jusqu'au réseau prenant en charge ce numéro Abis, en particulier l'équipement EQ-Abis. Cet équipement EQ-Abis peut être un commutateur fixe CAA (pour « Commutateur à Autonomie d'Acheminement ») si le réseau appelé est un réseau RTC (pour « Réseau Téléphonique Commuté »), ou un équipement serveur d'application téléphonique TAS (pour « Telephony Application Server » en anglais), par exemple en mode Terminating, d'un réseau cœur IMS/NGN (pour «IP Multimedia Subsystem / Next Generation Network » en anglais) si le réseau appelé est un réseau fixe de type VoIP (pour « Voice over IP » en anglais), ou encore un point d'entrée GMSC si le réseau appelé est un réseau mobile. Cet équipement EQ-Abis est configuré avec un renvoi d'appel inconditionnel des communications émises à destination du numéro Abis vers le numéro A du terminal TA.

Au cours d'une étape ERX2, l'équipement EQ-Abis envoie au dispositif GMSC du réseau mobile prenant en charge le numéro A, un message M2 de demande d'établissement d'une communication. Le message M2 est obtenu à partir du message M1 en modifiant le numéro appelé Abis par le numéro de renvoi A, en gardant le numéro appelant B, en valorisant le champ « numéro de redirection » avec le numéro initialement appelé Abis, en positionnant ou incrémentant un compteur de renvois, et en ajoutant une information sur la cause du renvoi.

Au cours d'une étape ERX3, l'équipement GMSC consulte la base de données HLR du réseau nominal en lui envoyant un message de type SRI (pour « Send Routing Information » en anglais) contenant le numéro A. La base de données HLR gérant ce numéro retourne le profil correspondant et en particulier la marque CAMEL T-CSI (pour « Terminating Camel Subscription Identifier » en anglais) demandant à déclencher la plateforme P.

Au cours d'une étape ERX4, l'équipement GMSC envoie à la plateforme P un message de type CAMEL IDP contenant le numéro appelé A, le numéro appelant B, le numéro de renvoi Abis présent dans le champ « Redirecting Number », et éventuellement un identifiant du service si la plateforme gère plusieurs services.

Au cours d'une étape ERX5, la plateforme P consulte la base de données MEM en utilisant le numéro A pour vérifier que le service est autorisé et actif pour ce numéro A. La plateforme P détecte qu'il y a un numéro de renvoi valorisé avec le numéro Abis.

Au cours d'une étape ERX6, la plateforme P envoie un message de notification, par exemple de type HTTPS, à l'équipement gérant la fonction Event API qui transmet ce message de notification au système BD-APP. Ce système envoie à l'application installée sur le terminal TA, par exemple via le réseau Internet, une notification comprenant le numéro de renvoi Abis et le numéro appelant B. Ainsi, l'application est avertie qu'elle va recevoir une communication qui devra être associée à l'identité non certifiée Abis.

Au cours d'une étape ERX7, la plateforme P envoie à l'équipement GMSC un message de type CAMEL Continue pour qu'il poursuive la présentation de la communication vers le terminal TA de manière standard : seul le numéro appelant B est transmis au terminal TA.

Au cours d'une étape ERX8 et de façon connue, l'équipement GMSC interroge la base de données HLR, via un message de type SRI pour obtenir un numéro technique routable du terminal TA par exemple selon la norme E.164, ce numéro étant attribué par le commutateur V-MSC auquel le terminal mobile TA est connecté sous couverture 2G ou 3G. La base de données HLR obtient ce numéro routable du commutateur V-MSC via un message de type PRN (pour « Provide Routable Number » en anglais) et le retourne à l'équipement GMSC.

Au cours d'une étape ERX9, l'équipement GMSC route la communication jusqu'au commutateur V-MSC en lui fournissant un numéro appelé MSRN (pour « Mobile Station Routable Number » en anglais), le numéro appelant B, mais également le numéro de renvoi Abis pour notifier le commutateur V-MSC que cette communication est issue d'un premier renvoi d'appel et ne devrait pas être renvoyée vers un numéro autre que la messagerie du numéro appelé A.

Au cours d'une étape ERX10, le commutateur V-MSC retrouve sur la base du numéro appelé MSRN le contexte du terminal mobile TA et route la communication vers le terminal TA en lui fournissant uniquement le numéro appelant B, par exemple via un message de type CC-Setup. L'application installée sur le terminal TA retrouve dans le message de notification de l'étape ERX6 le numéro B et présente alors la communication selon des paramètres de présentation spécifiques à l'identité non certifiée Abis, par exemple en générant une sonnerie donnée ou en affichant un fond d'écran ou un logo donné.

Lorsque le terminal TA est connecté au réseau en mode VoIP, par exemple lorsque le réseau cellulaire est de quatrième ou cinquième génération (4G ou 5G), des échanges similaires à ceux décrits en référence à la figure 1 se produisent pour mettre en œuvre le service d'émission ou de réception d'une communication en utilisant une identité certifiée ou une identité non certifiée, mais les échanges sont basés sur le protocole SIP (pour « Session Initiation Protocol » en anglais). De façon connue, le réseau nominal du terminal TA comporte une base de données de type HSS (pour « Home Subscriber Server » en anglais) en plus de la base HLR. De façon connue, le réseau 4G ou 5G comporte un équipement de type CSCF (pour « Call State Control Function » en anglais) et un équipement de type TAS (pour « Telephony Application Server » en anglais) au lieu des équipements VMSC utilisés dans les réseaux 2G ou 3G.

Ces méthodes de l'art antérieur permettant d'émettre ou de recevoir des communications en utilisant une identité certifiée ou une identité non certifiée ne sont pas satisfaisantes, que ce soit lorsque le terminal TA est connecté au réseau en mode circuit (par exemple sous couverture 2G ou 3G) ou en mode VoIP (par exemple sous couverture 4G ou 5G ou WiFi). En effet, la durée des différents échanges entre les équipements du réseau impacte le délai PDD (pour « Post Dial Delay » en anglais) nécessaire pour établir la communication, ce qui impacte l'expérience de l'utilisateur.

En outre ces méthodes se basent sur le protocole CAMEL, alors que ce protocole n'est pas supporté pas tous les opérateurs. En plus, ce protocole n'est pas supporté par tous les accords d'itinérance entre les opérateurs. En absence d'un tel accord, un terminal se trouvant en situation d'itinérance ne peut pas bénéficier du service : si l'utilisateur du terminal sélectionne d'émettre une communication en utilisant l'identité non certifiée Abis, l'émission de cette communication peut ne pas être admise par le réseau visité, ou la communication peut être présentée à l'appelant avec l'identité certifiée A.

De plus, le service selon les méthodes de l'art antérieur ne peut être fourni par un opérateur donné que pour les terminaux associés à des identités appelantes certifiées attribuées par cet opérateur.

Il existe donc un besoin d'une solution qui permet d'établir une communication en utilisant une identité appelante certifiée ou non certifiée selon un choix de l'utilisateur d'un terminal, et qui ne présente pas les inconvénients des méthodes de l'état de la technique.

### Exposé de l'invention

L'invention vise un procédé d'établissement d'une communication entre un premier et un deuxième terminal, le procédé étant mis en œuvre par un serveur et comportant des étapes de :
- réception, en provenance du premier terminal utilisant une première identité appelante, d'une requête comprenant une information sur une connexion du premier terminal et un identifiant du premier terminal ;
- obtention, à partir d'une base de données et en utilisant l'identifiant, d'un couple d'identités appelantes dont une certifiée et une non certifiée, le couple comprenant ladite première identité appelante et une deuxième identité appelante ;
- détermination, à partir d'une desdites identités appelantes et de l'information sur la connexion, d'un mode de connectivité du premier terminal ;
- détermination, en fonction du mode de connectivité, d'un numéro routable sur lequel le premier terminal peut envoyer une communication au serveur, le serveur étant configuré pour router la communication vers le deuxième terminal en présentant une identité appelante dudit couple ; et
- envoi du numéro routable au premier terminal.

Corrélativement, l'invention vise un serveur configuré pour établir une communication entre un premier et un deuxième terminal, le serveur comprenant :
- des moyens de communication configurés pour recevoir, en provenance du premier terminal utilisant une première identité appelante, une requête comprenant une information sur une connexion du premier terminal et un identifiant du premier terminal ;
- un module d'obtention, à partir d'une base de données et en utilisant l'identifiant, d'un couple d'identités appelantes dont une certifiée et une non certifiée, le couple comprenant ladite première identité appelante et une deuxième identité appelante ;
- un module de détermination, à partir d'une desdites identités appelantes et de l'information sur la connexion, d'un mode de connectivité du premier terminal ; et
- un module de détermination, en fonction du mode de connectivité, d'un numéro routable sur lequel le premier terminal peut envoyer une communication au serveur, le serveur étant configuré pour router la communication vers le deuxième terminal en présentant une identité appelante dudit couple ;
- les moyens de communication étant configurés pour envoyer le numéro routable au premier terminal.

Les caractéristiques et avantages du procédé d'établissement d'une communication proposé présentés ci-après s'appliquent de la même façon au serveur proposé et vice versa.

Le procédé proposé d'établissement d'une communication permet de retourner au premier terminal émetteur de la requête, le numéro routable qui permet au premier terminal de joindre le serveur et lui envoyer la communication destinée au deuxième terminal, le serveur étant configuré pour router cette communication vers le deuxième terminal.

Le serveur proposé peut être joignable via un ou plusieurs numéros routables. Le numéro routable retourné au premier terminal permet d'optimiser le routage de la communication du premier terminal vers le serveur, ce qui permet de réduire le coût de la communication et la consommation énergétique engendrée.

Le serveur proposé d'établissement d'une communication est un serveur centralisé permettant de fournir le service. Le serveur proposé peut être situé dans n'importe quel pays, par exemple dans le pays du réseau nominal du terminal, dans un pays d'un réseau visité par le terminal ou dans un autre pays.

La technique proposée ne se base pas sur les protocoles CAMEL ou INAP. Ainsi, le service d'établissement d'une communication en utilisant une identité appelante certifiée ou non certifiée peut être assuré lorsque le terminal est en situation d'itinérance, peu importe si le contrat d'itinérance supporte ou pas les protocoles CAMEL et/ou INAP. La technique proposée est néanmoins compatible avec l'utilisation des protocoles CAMEL et/ou INAP.

Le serveur proposé peut être géré par un opérateur téléphonique pour fournir le service à plusieurs terminaux, sans exiger que ces terminaux soient associés à des identités appelantes certifiées attribuées par cet opérateur. Alternativement, le serveur proposé peut être géré par une organisation de type OTT (pour « Over The Top» en anglais). Ainsi, n'importe quel terminal peut bénéficier du service, quel que soit son opérateur.

Le numéro routable est de préférence un numéro fixe. Alternativement, il peut être un numéro mobile. Le numéro routable peut être au format téléphonique national ou international E.164 ou bien encore au format TEL URI ou SIP URI.

Chacune des identités appelantes, certifiée et non certifiée, peut être un numéro fixe ou mobile.

Au sens de l'invention, une identité appelante certifiée, dite aussi de type certifiée, est un Numéro de Désignation de l'Installation NDI.

Au sens de l'invention, une identité appelante non certifiée, dite aussi de type non certifiée, est un Numéro de Désignation Supplémentaire NDS.

Une description sur les identités appelantes certifiée NDI et non certifiée NDS, conformément à l'art antérieur, est présentée en ce qui suit pour mieux comprendre l'invention.

Une identité appelante certifiée NDI est certifiée par une entité gérant le réseau du dispositif appelant, par exemple l'opérateur du terminal appelant.

Dans un mode de réalisation dans lequel la communication est un appel téléphonique, cette identité NDI peut correspondre au numéro de téléphone associé à la ligne téléphonique réelle du terminal appelant et fait partie du plan de numérotation international E.164.

Plusieurs identités appelantes certifiées peuvent identifier une même communication. Par exemple, conformément au protocole SIP (pour « Session Initiation Protocol » en anglais, norme IETF RFC 3261), un appel sortant d'une entreprise peut être identifié par un champ PAI (pour « Private Asserted Identity » en anglais et défini dans la norme IETF RFC3325) à un format SIP URI contenant le numéro du poste téléphonique appelant (dans une partie « utilisateur » conforme au format SIP URI) et un autre champ PAI à un format TEL URI correspondant au numéro de téléphone du standard de l'entreprise, les deux champs PAI étant inclus dans un message de présentation d'appel SIP INVITE.

Un message de présentation d'appel SIP INVITE peut contenir deux champs PAI ayant deux formats différents, mais qui contiennent ou non une même information, par exemple un même numéro de téléphone contenu dans un champ PAI au format TEL URI et dans la partie utilisateur d'un champ PAI au format SIP URI.

Conformément à l'art antérieur, une identité appelante non certifiée NDS est transportée de manière transparente de bout en bout depuis le terminal appelant jusqu'au terminal appelé sans aucun contrôle ni d'un opérateur appelant ni d'un opérateur appelé ni d'un opérateur de transit, cette identité appelante non certifiée NDS étant insérée par l'installation du terminal appelant.

Conformément au protocole SIP, une identité appelante non certifiée NDS peut être incluse dans un champ SIP FROM dans un message SIP INVITE. Selon l'état de la technique, le message SIP INVITE ne comporte qu'un seul champ SIP FROM.

Une identité appelante non certifiée peut être une identité masquée.

Une identité appelante non certifiée peut être une identité non disponible. Par exemple, un appel identifié par une identité appelante non certifiée non disponible, autrement dit un appel sans identité appelante non certifiée, peut être présenté par un message SIP INVITE comportant un champ SIP FROM vide, par exemple un champ FROM: "Unavailable" sip:unavailable@unknown.invalid. Typiquement lorsque la signalisation de la communication identifiée par cette identité appelante non certifiée emprunte un réseau ne supportant pas le type d'identités appelantes non certifiées, par exemple un réseau de vieille génération, l'identité appelante non certifiée est supprimée.

En France, c'est l'identité appelante non certifiée NDS qui est affichée sur le dispositif appelé. Par exemple, lorsqu'un centre d'appel émet des communications pour faire une campagne commerciale à la demande d'une société, le centre d'appel ne présente pas le numéro du centre d'appel, mais présente le numéro de la société comme identité appelante non certifiée NDS de sorte à ce que le dispositif appelé puisse rappeler la société et non pas le centre d'appel.

Dans d'autres pays, c'est l'identité appelante certifiée NDI qui est affichée sur le dispositif appelé.

Dans un mode de réalisation particulier, la requête comprend un numéro appelé, le procédé proposé comprend en outre :
- une étape d'enregistrement dans une mémoire, pour une durée donnée, du numéro appelé en association avec ledit couple (c'est-à-dire avec la première identité appelante et la deuxième identité appelante ); et
- suite à une réception d'une communication émise avec la première identité appelante, une étape d'obtention du numéro appelé et de la deuxième identité appelante à partir de la mémoire ; et
- une étape de routage de la communication vers le numéro appelé en présentant, selon un critère sélectionné par un utilisateur du premier terminal, la première ou la deuxième identité appelante dudit couple.

Dans un mode de réalisation particulier, le mode de connectivité du premier terminal correspond à une connectivité du premier terminal à son réseau nominal ou à un réseau visité et/ou à une connectivité en technologie circuit ou en technologie VoIP.

La technique proposée permet de tenir compte de la situation du premier terminal, sous couverture de son réseau nominal ou sous couverture d'un réseau visité, c'est-à-dire en situation d'itinérance, et de la technologie de la connexion du premier terminal au réseau nominal ou visité : en mode circuit ou en mode VoIP. Nous rappelons qu'une connexion en technologie VoIP peut être par exemple une connexion en technologie VoLTE, VoNR ou VoWiFi (pour « Voice over Long Term Evolution », « Voice over New Radio », et « Voice over Wireless Fidelity » en anglais). Tenir compte de ces éléments permet de déterminer, si le serveur peut être joignable via plusieurs numéros routables, le numéro routable qui optimise le routage de communication du premier terminal vers le serveur proposé, par exemple en termes de compatibilité technologique, d'optimisation de la qualité vocale des communications, de délai et/ou de coût de communication.

Dans un mode de réalisation particulier, le mode de connectivité déterminé représente une connectivité du premier terminal à son réseau nominal, le numéro routable étant un numéro attribué dans la même zone géographique de tarification que celle du réseau nominal, tel qu'un numéro du même pays que celui du réseau nominal.

Dans un mode de réalisation particulier, le mode de connectivité déterminé représente une connectivité du premier terminal à un réseau visité en technologie circuit, le numéro routable étant un numéro attribué dans la même zone géographique de tarification que celle du réseau visité, par exemple dans le même pays que celui du réseau visité ou dans la même zone géographique que celle du réseau visité dans laquelle les coûts d'itinérance sont imposés et identiques quel que soit le pays de cette zone, telle que la zone Europe.

Ce numéro routable attribué dans la même zone que celle du réseau visité permet de réduire le délai PDD et d'éviter les coûts de communications en situation d'itinérance. En effet, dans ce mode le terminal utilise un commutateur V-MSC de l'opérateur du pays visité, qui télécharge dans son module VLR le profil associé à l'identité appelante certifiée du terminal, depuis la base de données HLR de l'opérateur nominal. Nous rappelons que le modèle d'itinérance correspondant à la connectivité en mode circuit est de type LBO (pour « Local Break Out» en anglais).

Dans un mode de réalisation particulier, le mode de connectivité déterminé représente une connectivité du premier terminal à un réseau visité en technologie VoIP selon un modèle d'itinérance de type LBO et sous un accord d'itinérance en VoIP entre les opérateurs des réseaux nominal et visité, le numéro routable étant un numéro attribué dans la même zone géographique de tarification que celle du réseau visité, par exemple dans le même pays.

Même si la signalisation de la communication selon le protocole SIP fait un aller-retour entre le pays visité et le pays nominal puis entre le pays nominal et le pays visité, les flux média selon le protocole RTP (pour « Real Time Protocol » en anglais) restent localisés au niveau du pays visité, plus précisément entre le premier terminal, un équipement de type IM-GW (pour « IP Multimedia Gateway » en anglais) piloté par un équipement de type P-CSCF du pays visité (pour « Proxy Call State Control Function » en anglais) et un équipement d'interconnexion avec le serveur proposé. Nous rappelons que les flux média selon le protocole RTP sont coûteux au niveau des réseaux d'interconnexions internationales de type IPX (pour « International Packet Exchange » en anglais). Le numéro routable attribué dans le pays du réseau visité permet d'éviter ces coûts. En plus, garder ces flux média dans le pays visité permet d'éviter un délai RTD (pour « Round Trip Delay » en anglais) d'acheminement de ces flux entre le pays du réseau nominal et celui du réseau visité.

Dans un mode de réalisation particulier, le mode de connectivité déterminé représente une connectivité du premier terminal à un réseau visité en technologie VoIP selon un modèle d'itinérance de type S8HR et sous un accord d'itinérance en VoIP entre les opérateurs des réseaux nominal et visité, le numéro routable étant un numéro attribué dans la même zone géographique de tarification que celle du réseau nominal, par exemple dans le même pays que celui du réseau nominal.

Nous rappelons que le modèle S8HR (pour « S8 Home Routed ») est un modèle d'itinérance standardisé selon les normes 3GPP et GSMA. Dans ce cas, les communications du premier terminal passent par une station de base eNodeB ou gNode de l'opérateur visité et un commutateur SGW (pour « Serving Gateway » en anglais) de l'opérateur visité. Cependant, ces communications passent par un routeur PGW (pour « Packet network Gateway » en anglais) et des équipements du cœur de réseau IMS de l'opérateur nominal : des équipements de type P-CSCF, I-CSCF, S-CSCF et TAS. Le flux média RTP, selon le modèle d'itinérance S8HR, émis ou reçu par le terminal mobile transite au travers d'un réseau d'interconnexion IPX entre le premier terminal, un équipement SGW de l'opérateur visité, un équipement PGW de l'opérateur nominal et un équipement IM-GW de l'opérateur nominal contrôlé par l'équipement P-CSCF de l'opérateur nominal. Dans ce mode de réalisation, le numéro routable qui réduit le délai PDD et le coût de communication est un numéro attribué dans la même zone géographique de tarification du réseau nominal, par exemple dans le pays du réseau nominal.

La technique proposée permet de fournir le service pour les communications émises mais également pour les communications reçues par un terminal, sur une identité certifiée ou non certifiée de ce terminal.

Dans un mode de réalisation particulier, le procédé d'établissement d'une communication comprend des étapes de :
- suite à une réception d'une communication destinée à l'identité non certifiée du premier terminal, recherche dans la base de données de cette identité non certifiée, et en cas de recherche positive :
- obtention de l'identité certifiée associée dans la base de données à l'identité non certifiée ;
- envoi à destination de l'identité certifiée d'une notification alertant d'une future communication émise à destination de l'identité non certifiée, la notification comprenant le numéro appelant de la communication ; et
- routage de la communication vers l'identité certifiée.

Ce mode de réalisation concerne les communications émises à destination de l'identité non certifiée du premier terminal et renvoyées par le serveur proposé vers l'identité certifiée du premier terminal.

Dans un mode de réalisation particulier relatif à une communication émise à destination de l'identité non certifiée, le procédé d'établissement d'une communication comprend en outre une étape de sélection d'un équipement d'interconnexion dans le pays dans lequel l'identité certifiée est attribuée, cet équipement étant sélectionné à partir d'une table de routage et/ou d'une base de portabilité de type SPN (pour « Serveur de Portabilité de Numéro »), la communication émise à destination de l'identité non certifiée étant routée via l'équipement d'interconnexion.

L'équipement sélectionné permet de réduire la latence et le coût de la communication.

L'invention vise également un dispositif comprenant un module configuré pour enregistrer dans une mémoire au moins un identifiant associé à un couple d'identités appelantes d'un terminal, dont une certifiée et une non certifiée.

En particulier, le dispositif proposé peut faire partie du serveur proposé.

L'invention vise également un procédé de communication mis en œuvre par un terminal et comportant des étapes de :
- envoi à un serveur d'une requête comprenant une information sur une connexion du terminal et un identifiant du terminal ;
- réception en provenance du serveur d'un numéro routable sur lequel le terminal peut envoyer une communication au serveur, le serveur étant configuré pour router la communication vers un deuxième terminal en présentant une identité appelante parmi un couple d'identités appelantes associé audit identifiant, le couple comprenant une identité appelante certifiée et une identité non certifiée du terminal ; et
- envoi d'une communication au numéro routable.

Corrélativement, l'invention vise un terminal comprenant des moyens de communication configurés pour :
- envoyer à un serveur une requête comprenant une information sur une connexion du terminal et un identifiant du terminal ;
- recevoir en provenance du serveur un numéro routable sur lequel le terminal peut envoyer une communication au serveur, le serveur étant configuré pour router la communication vers un deuxième terminal en présentant une identité appelante d'un couple associé audit identifiant, le couple comprenant une identité appelante certifiée et une identité appelante non certifiée dudit terminal ; et
- envoyer une communication au numéro routable.

Les caractéristiques et avantages du procédé de communication proposé présentés ci-après s'appliquent de la même façon au terminal proposé et vice versa.

Les caractéristiques et avantages du procédé d'établissement d'une communication (et du serveur) proposé s'appliquent de la même façon au procédé de communication (et au terminal) proposé et vice versa.

Le terminal peut être de type téléphone mobile, par exemple un Smartphone, ou une tablette, ou un ordinateur ou tout autre type de dispositif communicant.

Dans un mode de réalisation particulier, le procédé de communication proposé comprend en outre des étapes de :
- réception d'une notification alertant d'une future communication sur un numéro, la notification comprenant le numéro appelant de ladite communication ;
- sélection, pour le numéro appelant et pour une durée donnée, de paramètres de présentation d'une communication ; et
- suite à une réception d'une communication dont le numéro appelant est le numéro appelant contenu dans la notification, présentation de la communication selon les paramètres sélectionnés.

Ce mode de réalisation permet de restituer une communication reçue sur l'identité certifiée de façon différente d'une communication reçue sur l'identité non certifiée.

L'invention a une application avantageuse pour des personnes en situation de télétravail ou de déplacement professionnel.

L'invention vise également un programme d'ordinateur sur un support d'enregistrement, ce programme étant susceptible d'être mis en œuvre dans un ordinateur ou dans le serveur proposé. Ce programme comporte des instructions adaptées à la mise en œuvre d'un procédé d'établissement d'une communication tel que décrit ci-dessus, lorsque le programme est exécuté par un ordinateur.

L'invention vise également un programme d'ordinateur sur un support d'enregistrement, ce programme étant susceptible d'être mis en œuvre dans un ordinateur ou dans le terminal proposé. Ce programme comporte des instructions adaptées à la mise en œuvre d'un procédé de communication tel que décrit ci-dessus, lorsque le programme est exécuté par un ordinateur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Le support d'information ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, le support d'informations ou d'enregistrement peut être un circuit intégré dans lequel l'un des programmes est incorporé, le circuit étant adapté pour exécuter ou pour être utilisé dans l'exécution d'un procédé conforme à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, illustre une architecture d'un réseau de communication dans lequel une méthode de l'état de la technique est mise en œuvre pour établir une communication ;
- la figure 2 est une architecture d'un réseau de communication dans lequel des procédés proposés sont mis en œuvre selon un premier mode de réalisation particulier;
- la figure 3 et la figure 3bis sont un organigramme représentant des étapes d'un procédé d'établissement d'une communication et des étapes d'un procédé de communication mis en œuvre selon le premier mode de réalisation particulier ;
- la figure 4 est un logigramme représentant une étape de détermination d'un numéro routable, selon un procédé d'établissement d'une communication mis en œuvre selon le premier mode de réalisation particulier ;
- la figure 5 est un organigramme représentant des étapes d'un procédé d'établissement d'une communication et des étapes d'un procédé de communication mis en œuvre selon une variante du premier mode de réalisation particulier ;
- la figure 6 est un organigramme représentant des étapes d'un procédé d'établissement d'une communication mis en œuvre selon un deuxième mode de réalisation particulier ;
- la figure 7 représente une architecture fonctionnelle, selon un mode de réalisation particulier, d'un système de communication ;
- la figure 8 représente une architecture matérielle d'un serveur selon un mode de réalisation particulier ; et
- la figure 9 représente une architecture matérielle d'un terminal selon un mode de réalisation particulier.

### Description des modes de réalisation

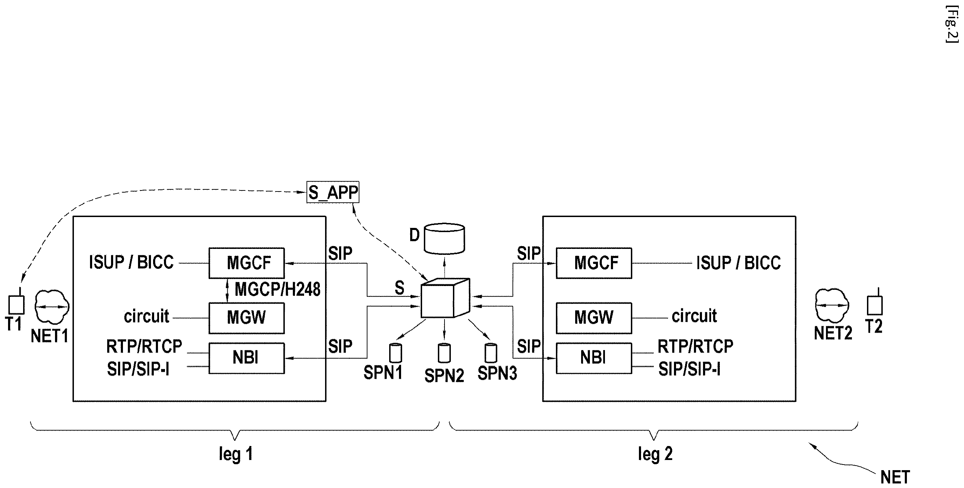

La figure 2 est une architecture d'un réseau de communication dans lequel un procédé d'établissement d'une communication et un procédé de communication sont mis en œuvre selon un mode de réalisation particulier.

Dans le mode décrit ici, le réseau NET est un réseau de type Internet connectant des réseaux de communication cellulaires NET1 et NET2, par exemple de type 2G, 3G, 4G, 5G ou de génération ultérieure. Cependant, ces réseaux NET1 et NET2 peuvent être d'une autre technologie, par exemple de type WiFi ou un réseau optique.

Le réseau de communication NET1 comporte au moins un terminal T1 conforme à la présente invention, tel qu'un téléphone mobile, une tablette ou un ordinateur. Une application logicielle APP est installée sur le terminal T1 pour bénéficier d'un service de communication en utilisant une identité appelante certifiée A du terminal T1, ou une identité appelante non certifiée Abis du terminal T1. Un terminal T2 associé à une identité appelante B est connecté au réseau NET2.

Le réseau NET comporte un serveur S d'établissement d'une communication, le serveur S étant conforme à la présente invention. Le serveur S peut être géré par un opérateur téléphonique ou par une organisation de type OTT. Le serveur S constitue une plateforme centralisée fournissant le service de communication en utilisant une identité certifiée ou non certifiée.

Le réseau NET comporte au moins une plateforme S_APP de notification gérée par un fournisseur d'un système d'opération du terminal T1, par exemple Apple ou Google (marques déposées). La plateforme S_APP est configurée pour notifier l'application APP installée sur le terminal T1 lorsqu'une communication entrante a été émise à destination de l'identité non certifiée Abis.

Dans le mode décrit ici, le terminal T1 communique avec le terminal T2 en mettant en œuvre le service de communication en utilisant l'identité certifiée A ou l'identité non certifiée Abis. Une communication entre les terminaux T1 et T2 passe via le serveur S. Nous notons la partie de la communication entre le terminal T1 et le serveur S par « leg1 » et la partie de la communication entre le serveur S et le terminal T2 par « leg2 ».

Le réseau NET comporte également un dispositif D conforme à l'invention. Ce dispositif D comprend un module configuré pour enregistrer dans une mémoire au moins un identifiant ID associé à un couple d'identités appelantes (A, Abis) d'un terminal (T1 par exemple), dont une certifiée (A) et une non certifiée (Abis). Les informations enregistrées dans la mémoire peuvent être enregistrées sous forme d'une base de données.

Le serveur S communique avec le dispositif D. En particulier, le dispositif D peut faire partie intégrante du serveur S.

Le serveur S comporte un serveur SIP en mode B2BUA (pour « Back To Back User Agent » en anglais) permettant de gérer deux parties d'une communication selon le protocole SIP, telles que les parties leg1 et leg2.

Le serveur S comporte en outre un client de type DNS ENUM (pour « Domain Name System Electronic NUMbering » en anglais) qui peut consulter des bases de données de portabilité de numéro, par exemple de type SPN, de différents pays.

Le serveur S comporte en outre un client Web HTTPS permettant d'envoyer des notifications vers des plateformes de notification, telle que la plateforme S_APP.

Chacune des deux parties leg1 et leg2 peut être soit en technologie circuit, soit en technologie VoIP.

Dans le cas de la technologie circuit, la signalisation de la communication est en protocole ISUP ou BICC. Des flux média de la communication transitent via des circuits 64 kbit/s si le protocole de signalisation est ISUP, ou en transport IP via le protocole RTP si le protocole de signalisation est BICC.

Dans le cas de la technologie VoIP, la signalisation de la communication est en protocole SIP ou SIP-I (pour « SIP ISUP »). Des flux média de la communication transitent en transport IP via le protocole RTP.

Différents numéros téléphoniques routables fixes ou mobiles sont attribués au serveur S dans plusieurs pays. Ces numéros routables représentent des numéros d'accès au service. On note ces numéros par TSAN (pour « Technical Service Access Number » en anglais).

L'avantage d'utiliser plusieurs TSAN est de pouvoir gérer de manière optimale la qualité de service, notamment en termes de délai d'établissement d'une communication et de qualité vocale des communications (par exemple en limitant l'usage de transcodeurs audio sur des canaux de communication internationaux, ce qui permet de limiter le débit nécessaire aux flux média de communication), et les coûts d'interconnexion des deux parties leg1 et leg2.

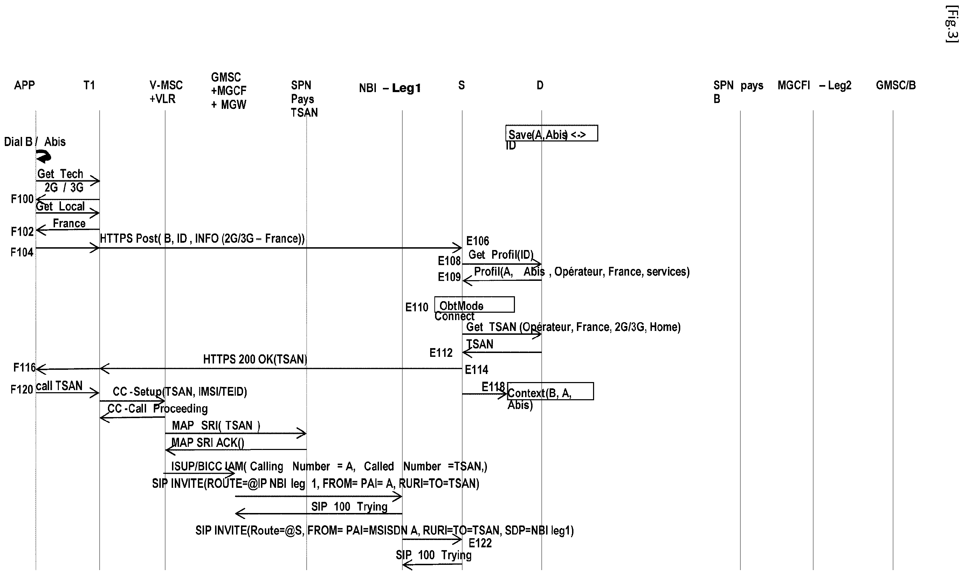

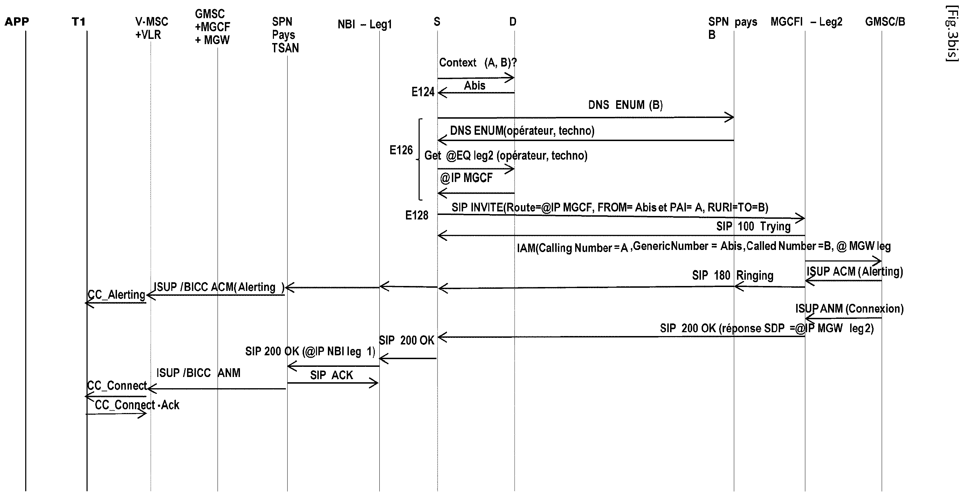

La figure 3 et la figure 3bis sont un organigramme représentant des étapes d'un procédé d'établissement d'une communication (référencées Exxx) et des étapes d'un procédé de communication (référencées Fyyy), mis en œuvre selon un premier mode de réalisation particulier, respectivement par le serveur S et le terminal T1 décrits en référence à la figure 2.

Dans le mode décrit ici, le réseau NET1 est le réseau nominal du terminal T1. Les réseaux NET1 et NET2 se trouvent dans des pays différents et sont gérés par deux opérateurs différents. Nous supposons par exemple que le terminal T1 est en France et que le terminal T2 est en Angleterre.

Nous supposons que le terminal T1 a déjà souscrit auprès du serveur S au service de communication en utilisant une identité certifiée ou une identité non certifiée.

Lors de la phase de souscription au service, le terminal T1 fournit au serveur S son identité appelante certifiée A et au moins une identité appelante non certifiée Abis.

Le terminal T1 peut fournir également au serveur S :
- le nom de l'opérateur qui a attribué l'identité appelante certifiée A, et implicitement le pays dans lequel cette identité A est attribuée ;
- une liste de services autorisés ou non autorisés, par exemple une interdiction d'émettre des communications vers des numéros surtaxés de type Audiotel, une interdiction d'émettre des communications vers certains préfixes ou numéros internationaux, une limitation d'une durée maximale d'un appel, et/ou une autorisation ou une interdiction d'un service de double appels ; et/ou
- un identifiant IMEI (pour « International Mobile Equipement Identity » en anglais) du terminal T1, pour améliorer la sécurisation du service.

Suite à la réception de ces informations, et durant la phase de souscription au service, le serveur S attribue et envoie au terminal T1 un identifiant technique ID associé au couple des identités A et Abis. L'application APP installée sur le terminal T1 associe un environnement de présentation de communications à cet identifiant ID ou à l'identité non certifiée Abis.

Dans le cas où plusieurs identités appelantes non certifiées sont associées au terminal T1, le serveur S lui attribue autant d'identifiants techniques. L'application APP associe un environnement de présentation de communications pour chaque identifiant technique.

Nous supposons que l'utilisateur du terminal T1 déclenche l'application APP et compose le numéro B associé au terminal T2. L'utilisateur souhaite émettre une communication en présentant au terminal B l'identité appelante non certifiée Abis.

Au cours d'une étape F100 du procédé de communication, l'application APP obtient via les différentes interfaces d'applications API fournies par le système d'exploitation du terminal T1 des informations sur la technologie de connexion du terminal T1 au réseau NET1. Dans cet exemple, nous supposons qu'il s'agit d'une connectivité en mode circuit, le réseau NET1 étant un réseau cellulaire de 2^{ème} ou 3^{ème} génération.

Au cours d'une étape F102, le terminal T1 et plus précisément l'application APP obtient une information sur la localisation courante du terminal T1. Cette information peut être obtenue à partir d'un module de localisation GPS (pour « Global Positioning System » en anglais), ou à partir d'un code MCC (pour « Mobile Country Code» en anglais) du réseau d'accès compris dans un identifiant de la cellule radio 2G ou 3G.

Au cours d'une étape F104, le terminal T1 et plus précisément l'application APP envoie au serveur S une requête, par exemple de type HTTPS POST, comprenant l'identifiant technique ID, le numéro appelé B, et une information INFO sur la connexion du terminal T1 au réseau NET1. L'information INFO comporte une indication que la technologie de connectivité est en mode circuit et que le terminal T1 se situe en France. Une adresse du serveur S est préconfigurée dans l'application APP.

Au cours d'une étape E106 du procédé d'établissement d'une communication, le serveur S reçoit la requête.

Au cours d'une étape E108, le serveur S interroge le dispositif D en fournissant comme entrée l'identifiant technique ID.

Le dispositif D retourne au serveur S, au cours d'une étape E109, un couple comprenant l'identité appelante certifiée A et l'identité appelante non certifiée Abis, le nom de l'opérateur du réseau nominal et le pays de cet opérateur (France), et éventuellement la liste des services autorisés ou non autorisés pour le terminal T1.

Au cours d'une étape E110, le serveur S détermine à partir de l'identité appelante certifiée A et de l'information INFO, un mode de connectivité du terminal T1. Dans cet exemple, le mode de connectivité correspond à une connectivité au réseau nominal selon la technologie circuit.

Au cours d'une étape E112, le serveur S détermine, en fonction du mode de connectivité, un numéro routable TSAN sur lequel le terminal T1 peut envoyer une communication au serveur S. Le numéro routable TSAN permet d'optimiser le routage de la communication entre le terminal appelant T1 et le serveur centralisé S.

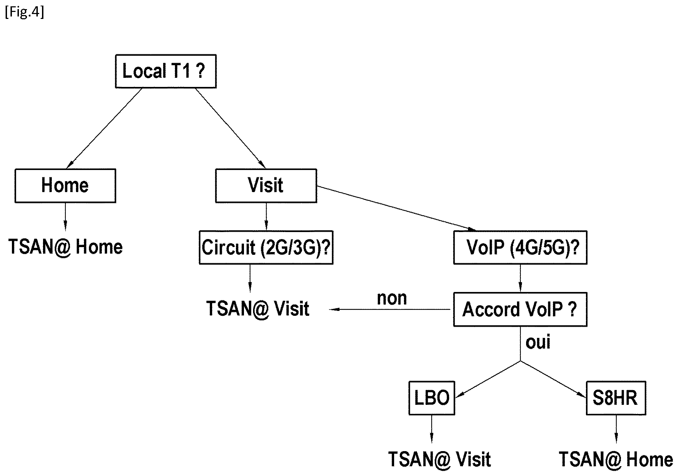

La figure 4 est un logigramme représentant l'étape E112 de détermination d'un numéro routable TSAN :
- si le terminal T1 est connecté à son réseau nominal, le TSAN est un numéro routable attribué dans la même zone géographique de tarification que celle du réseau nominal, par exemple dans le pays du réseau nominal ;
- si le terminal T1 est connecté à un réseau visité (en situation d'itinérance) en technologie circuit, le TSAN est un numéro routable attribué dans la même zone géographique de tarification que celle du réseau visité, par exemple dans le pays du réseau visité ;
- si le terminal T1 est connecté à un réseau visité (en situation d'itinérance) en technologie VoIP, en absence d'un accord d'itinérance supportant la technologie VoIP entre les opérateurs des réseaux nominal et visité, le TSAN est un numéro routable attribué dans la même zone géographique de tarification que celle du réseau visité, par exemple dans le pays du réseau visité (puisque dans ce cas le réseau visité impose au terminal d'activer le mode Circuit Switch Fallback et qui utilise une connectivité de type 2G ou 3G le temps de la communication );
- si le terminal T1 est connecté à un réseau visité (en situation d'itinérance) en technologie VoIP selon un modèle d'itinérance de type LBO et sous un accord d'itinérance en VoIP entre les opérateurs des réseaux nominal et visité, le TSAN est un numéro routable attribué dans la même zone géographique de tarification que celle du réseau visité, par exemple dans le pays du réseau visité ; et
- si le terminal T1 est connecté à un réseau visité (en situation d'itinérance) en technologie VoIP selon un modèle d'itinérance de type S8HR et sous un accord d'itinérance en VoIP entre les opérateurs des réseaux nominal et visité, le TSAN est un numéro routable attribué dans la même zone géographique de tarification que celle du réseau nominal, par exemple dans le pays du réseau nominal.

Dans l'exemple décrit en référence aux figures 3 et 3bis, le mode de connectivité correspond à une connectivité au réseau nominal selon la technologie circuit, le numéro TSAN déterminé (E112) est donc un numéro routable attribué dans la même zone géographique de tarification du réseau nominal, par exemple dans le pays du réseau nominal (France). En particulier, ce numéro TSAN peut être sélectionné (E112) en fonction de l'opérateur du réseau nominal. Le serveur S peut obtenir le numéro TSAN à partir d'une base de données hébergée par le dispositif D.

Au cours d'une étape E114, le serveur S envoie le numéro TSAN au terminal T1, par exemple via un code de type HTTPS 200 OK.

Le terminal T1 reçoit le numéro TSAN au cours d'une étape F116.

Au cours d'une étape E118, le serveur S enregistre dans une mémoire, pour une durée donnée, un contexte d'une future communication, ce contexte comprenant l'identité appelante certifiée A (utilisée comme identité appelante de la requête), l'identité appelante non certifiée Abis et le numéro appelé B.

Cette étape d'enregistrement E118 est mise en œuvre après l'étape E106 de réception de la requête. L'étape d'enregistrement E118 peut être mise en œuvre avant, après ou simultanément avec l'une des étapes E108, E110, E112 ou E114.

Au cours d'une étape F120 du procédé de communication, le terminal T1 et plus précisément l'application APP émet une communication à destination du numéro TSAN.

De façon connue, le terminal T1 envoie un message de type CC_Setup du domaine Call Control (CC) à destination du commutateur V-MSC auquel le terminal appelant T1 est connecté. Ce message contient le numéro appelé TSAN et un identifiant TEID ou IMSI du terminal T1 (pour « Temporary Equipement Identifier » et « International Mobile Subscription Identity » en anglais). Le commutateur V-MSC retrouve sur la base de l'identifiant TEID ou IMSI un profil de service téléphonique téléchargé dans un module VLR du commutateur V-MSC, depuis une base de données HLR du réseau nominal lors de la connexion initiale du terminal T1. En particulier, l'identité appelante certifiée A est retrouvée dans ce profil. Comme le numéro appelé TSAN est un numéro attribué dans le même pays que celui du réseau nominal, le commutateur V-MSC consulte un serveur de portabilité de type SPN en fournissant en clé d'entrée le numéro appelé TSAN de sorte à déterminer l'opérateur prenant en charge ce numéro TSAN et la technologie de communication utilisée par un point d'entrée du réseau prenant en charge le numéro TSAN. Supposons dans cet exemple que la technologie du point d'entrée est la VoIP, le commutateur V-MSC envoie un message de type ISUP/BICC IAM à un équipement GMSC qui intègre une fonction MGCF (pour « Media Gateway Control Function » en anglais). Ce message contient l'identité appelante certifiée A dans les champs « Calling Number » et « Generic Number », et le numéro TSAN dans le champ « Called Number ». De façon connue, lorsque l'équipement GMSC reçoit ce message, il détermine qu'il doit transmettre en aval la signalisation selon le protocole SIP ou éventuellement SIP-I. La fonction MGCF constitue une passerelle de signalisation entre les protocoles ISUP/BICC d'une part et les protocoles SIP/SIP-I d'autre part. La fonction MGCF contrôle une fonction MGW (pour « Media Gateway » en anglais) dont le rôle est de transformer une communication en mode circuit 64kbit/s en protocole média RTP-RTCP (pour « Real-Time Transport Control Protocol » en anglais) ou un relais RTP-RTCP en protocole BICC.

De façon connue, la fonction MGCF génère un message de signalisation de type SIP ou SIP-I INVITE et le route par exemple vers un équipement NBI (pour « Network Border Infrastructure » en anglais), point d'entrée du réseau en charge du numéro appelé TSAN, qui lui-même le route vers le serveur S. L'équipement NBI et le serveur S peuvent être interconnectés par un réseau de type Internet ou peuvent être colocalisés.

Au cours d'une étape E122, le serveur S et plus précisément sa fonction B2BUA reçoit le message SIP INVITE.

Ainsi la première partie de la communication leg1 est établie.

Suite à la réception (E122) du message SIP INVITE émis avec l'identité appelante A, le serveur S obtient cette identité certifiée A, par exemple à partir du champ PAI de préférence ou FROM du message SIP INVITE. Au cours d'une étape E124, le serveur S recherche, au moins sur la base de l'identité appelante certifiée A, le contexte de communication sauvegardé précédemment au cours de l'étape E118 et retrouve ainsi que le numéro B a été associé dans la mémoire avec l'identité appelante certifiée A. Le serveur S, et en particulier son serveur B2BUA obtient de la mémoire le numéro appelé B et l'identité appelante non certifiée Abis.

Au cours d'une étape E126, le serveur S et en particulier son serveur B2BUA détermine le meilleur équipement d'interconnexion à utiliser pour joindre le numéro appelé B. Disposant du préfixe international du numéro appelé B (dans cet exemple le préfixe +44 pour l'Angleterre), le serveur S détermine que le numéro appelé B est attribué en Angleterre. Au cours de l'étape E126, le serveur B2BUA consulte, par exemple via le protocole DNS ENUM, la base de portabilité SPN du pays appelé (l'Angleterre dans notre exemple), et obtient ainsi l'opérateur ayant en charge ce numéro B ainsi que la technologie du point d'entrée de cet opérateur.

Nous supposons dans cet exemple que le point d'entrée de cet opérateur est en technologie circuit. Par conséquent, le serveur B2BUA sélectionne pour la partie leg 2, un équipement MGCF de l'opérateur prenant en charge l'appelé B du pays destinataire (l'Angleterre) qui contrôle lui-même une fonction MGW.

Au cours d'une étape E128, le serveur S et en particulier son serveur B2BUA route le message SIP INVITE vers le numéro B en modifiant les informations d'identité appelante selon les règles d'affichage du numéro appelant du pays de l'appelé:
- en insérant l'identité appelante non certifiée Abis dans le champ « FROM » et l'identité appelante certifiée A dans le champ PAI, si c'est l'identité appelante non certifiée FROM qui doit être affichée sur le terminal appelé T2 selon la réglementation en Angleterre ; ou
- en insérant l'identité appelante certifiée A ou non certifiée Abis dans le champ « FROM » et l'identité appelante non certifiée Abis dans au moins un champ PAI, si c'est l'identité appelante certifiée PAI qui doit être affichée sur le terminal appelé T2 selon la réglementation en Angleterre.

De façon connue, l'équipement MGCF transforme le message SIP en protocole ISUP/BICC et pilote une fonction MGW. La communication est routée jusqu'à l'équipement GMSC de l'opérateur appelé et ce dernier route la communication vers le terminal appelé T2 selon sa localisation (réseau nominal ou visité) et selon le type de son réseau d'accès utilisé par le terminal T2 (par exemple réseau cellulaire 2G/3G ou 4G/5G ou WiFi).

Dans un mode de réalisation particulier, si au cours de l'étape E124, le serveur S ne trouve pas le contexte de communication, par exemple parce qu'il a été effacé de la mémoire après un certain délai, le serveur S et en particulier son serveur B2BUA peut envoyer au terminal T1 un code erreur de type 4XX ou 5XX ou 6XX, qui se traduit après transformation en protocole ISUP, ISUP/BICC et/ou Call Control en une tonalité d'erreur sur le terminal appelant T1.

Alternativement, le serveur B2BUA du serveur S peut piloter un serveur vocal configuré pour émettre un message vocal indiquant le problème à l'appelant et/ou lui proposant de poursuivre la communication sortante en utilisant l'identité certifiée A en tant que numéro appelant plutôt que l'identité appelante non certifiée Abis.

Alternativement, le serveur B2BUA du serveur S peut être configuré dans ce cas pour poursuivre implicitement la communication sortante en utilisant l'identité certifiée A en tant que numéro appelant plutôt que l'identité appelante non certifiée Abis.

Dans un mode de réalisation où la consultation d'une base SPN n'est pas possible ou non autorisée pour le serveur S, le serveur S et en particulier son serveur B2BUA utilise au cours de l'étape E126 une table de routage pour déterminer le meilleur équipement d'interconnexion à utiliser pour joindre le numéro appelé B.

Dans les exemples décrits ci-avant, nous avons considéré l'hypothèse que l'utilisateur du terminal T1 sélectionne d'émettre la communication sortante en utilisant l'identité non certifiée Abis en tant que numéro appelant. Alternativement, l'utilisateur peut choisir d'émettre la communication sortante en utilisant l'identité certifiée A en tant que numéro appelant. Dans ce cas, la communication est traitée de manière connue sans transiter par le serveur S.

Selon un autre exemple de mise en œuvre du mode de réalisation décrit en référence aux figures 2 à 4, le réseau NET1 est un réseau visité du terminal T1, autrement dit T1 est en situation d'itinérance. Le réseau NET1 est en technologie circuit. Des étapes identiques à celles décrites en référence aux figures 3 et 3bis sont mises en œuvre, sauf que le numéro TSAN déterminé au cours de l'étape E112 est un numéro attribué dans le pays ou la zone géographique du réseau visité.

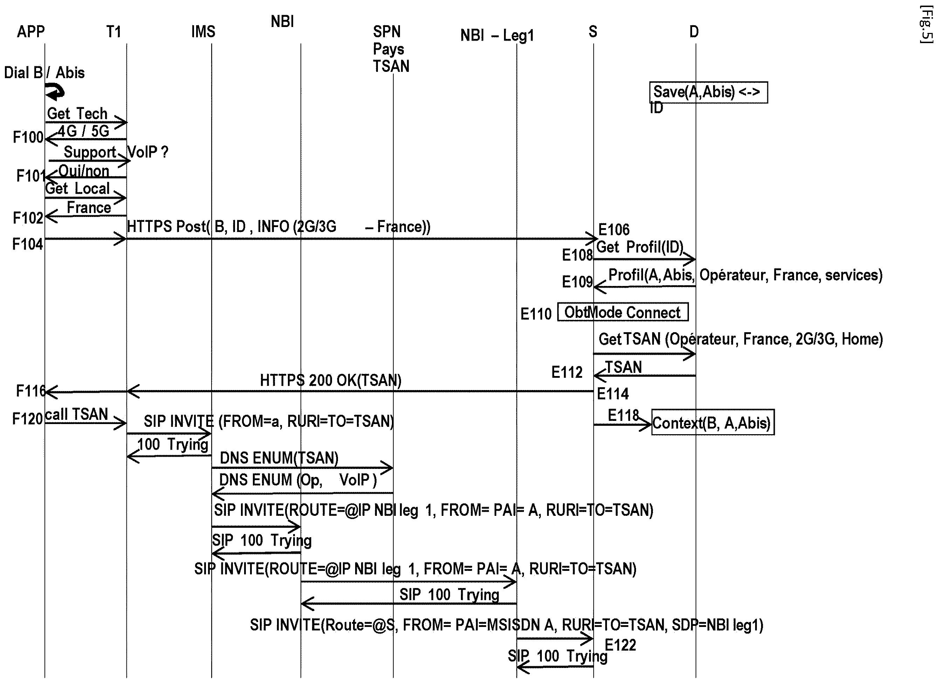

La figure 5 est un organigramme représentant des étapes d'un procédé d'établissement d'une communication (référencées Exxx) et des étapes d'un procédé de communication (référencées Fyyy), mis en œuvre selon une variante du mode de réalisation décrit en référence aux figures 2, 3 et 4.

Dans l'exemple illustré par la figure 5, le réseau NET1 est le réseau nominal du terminal T1. Contrairement à l'exemple des figures 3 et 3bis, le réseau NET1 est un réseau cellulaire de 4^{ème} ou 5^{ème} génération, en technologie VoIP.

En plus de l'obtention de la technologie d'accès (F100) et d'une information sur la localisation du terminal T1 (F102), l'application APP obtient au cours d'une étape F101, via des interfaces d'application du terminal T1, une information pour déterminer si le terminal T1 supporte ou pas la technologie VoIP.

Si le terminal T1 ne supporte pas la technologie VoIP, il va basculer en mode circuit (2G ou 3G), par exemple en mode CS Fallback, et des étapes identiques à celles décrites en référence aux figures 3 et 3bis sont mises en œuvre.

Si le terminal T1 supporte la technologie VoIP, des étapes similaires à celles décrites en référence aux figures 3 et 3bis sont mises en œuvre, mais les échanges dans le réseau NET1 sont conformes au protocole SIP ou SIP-I tels que décrits par la figure 5.

Selon un autre exemple d'implémentation, le réseau NET1 est un réseau WiFi. Si le terminal T1 supporte la technologie VoWiFi, des étapes identiques à celles décrites en référence à la figure 5 sont mises en œuvre.

Selon un autre exemple d'implémentation, le réseau NET1 est un réseau visité pour le terminal T1, autrement dit le terminal T1 est en situation d'itinérance. Si l'application APP détermine au cours de l'étape F100 que la technologie d'accès au réseau NET1 est en VoIP, l'application APP obtient au cours d'une étape F101 (similaire à l'étape F101 décrite en référence à la figure 5), via des interfaces d'application du terminal T1, une information pour déterminer si le terminal T1 supporte ou pas la technologie VoIP, mais aussi si un accord d'itinérance entre l'opérateur du réseau nominal du terminal T1 et celui du réseau visité NET1 supporte la technologie VoIP. En absence du support de la technologie VoIP par l'accord d'itinérance, le terminal T1 va basculer en mode circuit (2G ou 3G), par exemple en mode CS Fallback, et des étapes identiques à celles décrites en référence aux figures 3 et 3bis sont mises en œuvre. Si la technologie VoIP est supportée par l'accord d'itinérance, l'application recherche l'adresse du point d'entrée du réseau IMS (par exemple l'équipement P-CSCF) obtenue du cœur de réseau mobile, plus précisément à partir d'un équipement MME (pour « Mobility Management Entity » en anglais) si le réseau NET1 est un réseau cellulaire 4G, ou à partir d'un équipement AMF (pour « Access and Mobility Management Function » en anglais) si le réseau NET1 est un réseau cellulaire 5G. Nous rappelons que le format de l'adresse du point d'entrée P-CSCF du réseau IMS est standardisé par le 3GPP et est du type : mnc.mcc.ims.network.3gpp.org avec mnc est un code de l'opérateur et mcc est un code du pays de l'opérateur gérant l'équipement P-CSCF. Le terminal T1 envoie (F104) toute ou partie de l'adresse du point d'entrée dans la requête HTTPS à destination du serveur S de sorte qu'il puisse déterminer le modèle d'itinérance : S8HR ou LBO, et pouvoir ainsi déterminer le numéro TSAN à retourner selon le logigramme de la figure 4. Si le code pays du point d'entrée du réseau IMS est identique au code pays de l'opérateur nominal prenant en charge le terminal T1 et déclaré dans le dispositif D, et si le terminal T1 est localisé dans un pays visité, alors il est déterminé que le modèle d'itinérance VoIP S8HR est mis en œuvre. Si le code pays du point d'entrée du réseau IMS est différent du code pays de l'opérateur nominal prenant en charge le terminal T1 et déclaré dans le dispositif D, et si le terminal T1 est localisé dans un pays visité, alors il est déterminé que le modèle d'itinérance VoIP LBO est mis en œuvre.

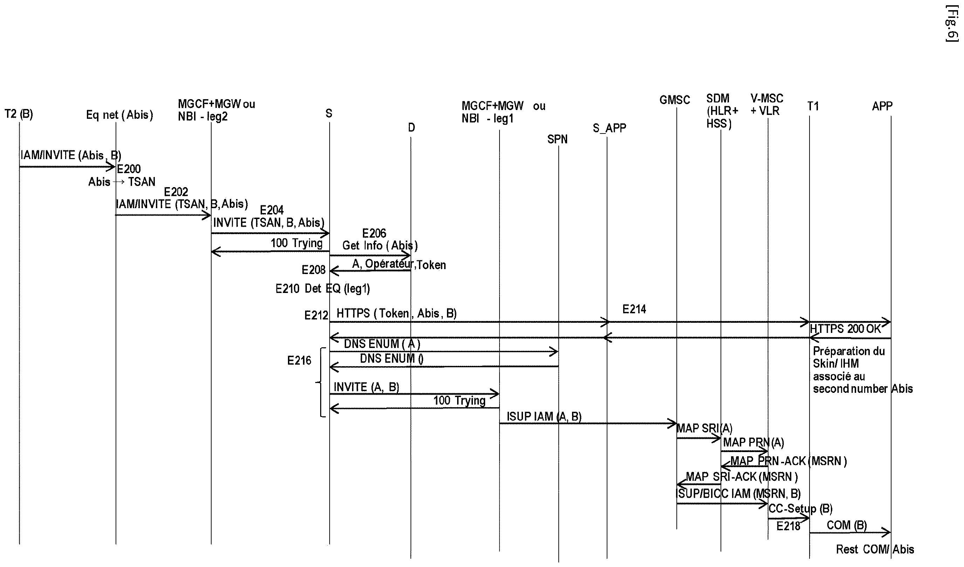

La figure 6 est un organigramme représentant des étapes d'un procédé d'établissement d'une communication (référencées Exxx) mis en œuvre selon un deuxième mode de réalisation particulier par le serveur S décrit en référence à la figure 2.

Dans ce deuxième mode de réalisation, le terminal T2 émet une communication à destination de l'identité non certifiée Abis qui est associée au terminal T1.

Nous supposons que le réseau NET1 est en technologie circuit et représente le réseau nominal ou un réseau visité pour le terminal T1.

Le terminal appelant T2, ayant le numéro B, compose le numéro Abis.

La communication est routée de manière classique jusqu'à l'équipement en charge des services du numéro Abis, tel qu'un serveur d'application téléphonique TAS dans le cas d'un réseau VoIP ou un équipement de type CAA dans le cas d'un réseau RTC ou un équipement GMSC dans le cas d'un réseau mobile. Cet équipement reçoit la communication au cours d'une étape E200. Cet équipement est configuré pour le numéro Abis avec un renvoi d'appel, par exemple un renvoi inconditionnel, vers un numéro routable TSAN d'accès au service pour les communications entrantes vis-à-vis du terminal T1. La configuration du renvoi peut être effectuée via une ligne téléphonique associée au numéro Abis, ou via l'application APP installée sur le terminal T1 si un tel renvoi est autorisé, ou via un service web selfcare.

Le numéro TSAN optimum est sélectionné en fonction du pays dans lequel le numéro Abis est attribué, de l'opérateur attributaire du numéro Abis, du type de ce numéro fixe ou mobile, et de la technologie du point d'entrée de l'opérateur (circuit ou VoIP). L'équipement téléphonique en charge du numéro Abis peut avoir ces informations à partir d'un serveur de portabilité, par exemple de type SPN, sur la base du numéro Abis.

L'équipement TAS ou CAA ou GMSC en charge du numéro Abis transmet au cours d'une étape E202 la communication vers le numéro TSAN en modifiant le numéro appelé dans le message de signalisation avec le numéro TSAN en lieu et place du numéro Abis, en ajoutant dans ce message de signalisation et plus précisément dans un champ de redirection l'identité de l'appelé initial, c'est-à-dire le numéro Abis, en précisant la cause du renvoi, par exemple un renvoi inconditionnel, et en positionnant ou en incrémentant un compteur de renvoi(s).

Suite à la transmission E202, la communication est routée de manière classique jusqu'à un équipement d'interconnexion de la partie leg2 tel qu'illustré par la figure 2 : un équipement de type MGCF en cas de technologie circuit ou un équipement de type NBI en cas de technologie VoIP. Cet équipement est associé au numéro TSAN.

Au cours d'une étape E204, l'équipement MGCF ou NBI associé au numéro TSAN transmet la communication entrante, par exemple en protocole SIP, vers le serveur S et plus précisément le serveur B2BUA.

Au cours d'une étape E206, le serveur B2BUA consulte la mémoire du dispositif D en fournissant en clé le numéro Abis présent dans le champ « numéro de renvoi » du message SIP INVITE, par exemple dans un entête de type SIP Diversion et/ou History-Info.

Au cours d'une étape E208, le serveur S et plus précisément son serveur B2BUA obtient du dispositif D l'identité certifiée A correspondant au terminal T1 et le nom de l'opérateur gérant ce numéro A.

Au cours d'une étape E210, le serveur S et plus précisément son serveur B2BUA détermine sur la base de l'opérateur identifié, l'équipement d'interconnexion de la partie leg1 permettant de contacter l'équipement d'entrée de cet opérateur au moindre délai et coût, cet équipement étant de type MGCF en cas de technologie circuit ou de type NBI en cas de technologie VoIP. Le serveur S peut déterminer (E210) cet équipement par des tables de routage préconfigurées ou par consultation d'un serveur de portabilité SPN du pays dans lequel le numéro A est attribué.

Au cours d'une étape E212, le serveur S et plus précisément son client web HTTPS envoie à la plateforme S_APP de notification associée au système d'opération du terminal T1 (par exemple Apple IOS ou Google Android, marques déposées), un message de notification qui prévient d'une présentation d'une communication future destinée à l'identité non certifiée Abis.

La plateforme S_APP transmet au cours d'une étape E214 cette notification à l'application APP. La notification contient le numéro appelant B, le numéro Abis ou un identifiant technique associé au numéro Abis de sorte à informer en avance de phase que la prochaine communication que l'application APP recevra via les interfaces d'application du terminal T1 devra être liée au contexte de l'identité non certifiée Abis et non pas de l'identité certifiée A. La notification peut utiliser un Token unique représentatif de l'application du terminal T1.

Au cours d'une étape E216, le serveur S route la communication entrante de manière classique jusqu'au point d'entrée du réseau NET1, par exemple un équipement de type GMSC dans notre exemple. De façon connue, un numéro MSRN de joignabilité du terminal T1 attaché sur un commutateur V-MSC est obtenu, via interrogation d'une base de données HLR qui elle-même contacte le commutateur V-MSC. L'équipement GMSC route, par exemple en protocole ISUP/BICC, la communication entrante vers le commutateur V-MSC qui lui-même présente la communication au terminal T1 selon le protocole Call Control et via un message CC-Setup en fournissant le numéro d'appelant B.

Au cours d'une étape E218, le terminal T1 reçoit la communication et notifie, via ses interfaces d'application, l'application APP qui restitue la communication selon des paramètres associés à l'identité non certifiée Abis.

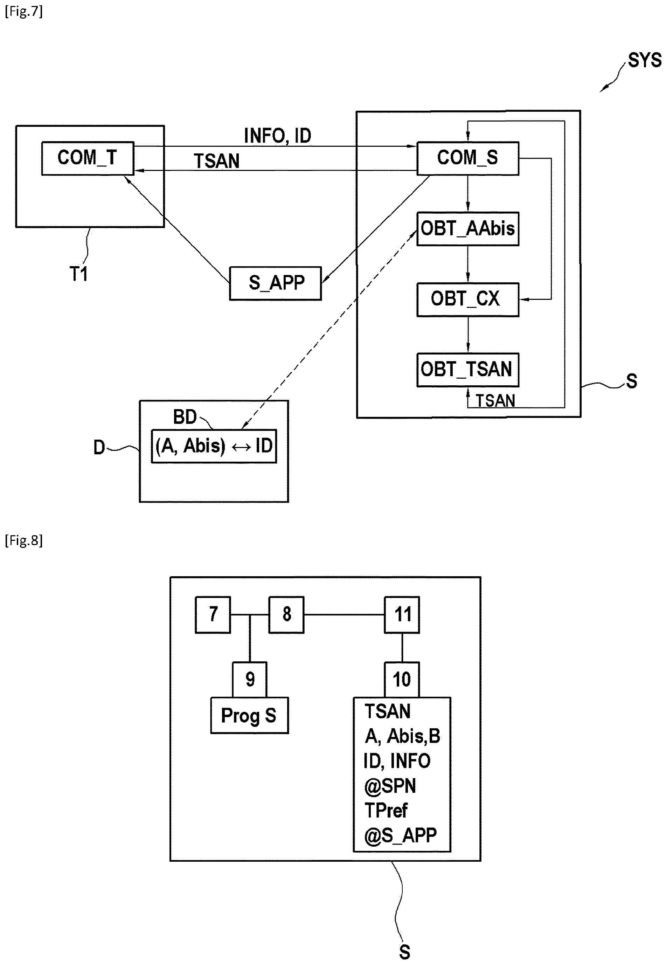

La figure 7 représente une architecture fonctionnelle, selon un mode de réalisation de l'invention, d'un système de communication SYS proposé.

Le système SYS comporte le terminal T1, le dispositif D et le serveur S.

Le serveur S est configuré pour établir une communication entre deux terminaux T1 et T2. Le serveur S comprend :
- des moyens de communication COM_S configurés pour recevoir, en provenance du premier terminal T1 utilisant une première identité appelante A, une requête comprenant l'information INFO sur la connexion du premier terminal T1 et l'identifiant ID du premier terminal T1;
- un module OBT_AAbis d'obtention, à partir d'une base de données et en utilisant l'identifiant ID, d'un couple d'identités appelantes (A, Abis) dont une certifiée (A) et une non certifiée (Abis), le couple comprenant la première identité appelante A et la deuxième identité appelante Abis ;
- un module OBT_CX de détermination, à partir d'une desdites identités appelantes (A) et de l'information sur la connexion INFO, d'un mode de connectivité du premier terminal T1; et
- un module OBT_TSAN de détermination, en fonction du mode de connectivité, du numéro routable TSAN sur lequel le premier terminal T1 peut envoyer une communication au serveur S, le serveur étant configuré pour router la communication vers le deuxième terminal T2 en présentant une identité appelante du couple (A, Abis);
- les moyens de communication COM_S étant configurés pour envoyer le numéro routable TSAN au premier terminal T1.

Les moyens de de communication COM_S sont en outre configurés pour envoyer (étape E212 sur la figure 6) le message de notification à la plateforme S_APP de notification, pour prévenir d'une présentation d'une communication future destinée à l'identité non certifiée Abis.

Le dispositif D comprenant un module BD configuré pour enregistrer dans une mémoire au moins un identifiant ID associé à un couple d'identités appelantes (A, Abis) d'un terminal T1, dont une certifiée (A) et une non certifiée (Abis).

Le terminal T1 comprend des moyens de communication COM_T configurés pour :
- envoyer au serveur S une requête comprenant l'information INFO sur la connexion du terminal T1 et l'identifiant ID du terminal T1;
- recevoir en provenance du serveur S le numéro routable TSAN sur lequel le terminal T1 peut envoyer une communication au serveur S, le serveur étant configuré pour router la communication vers le deuxième terminal T2 en présentant une identité appelante d'un couple (A, Abis) associé à l'identifiant ID, le couple comprenant une identité appelante certifiée (A) et une identité appelante non certifiée (Abis) du terminal T1; et
- envoyer une communication au numéro routable TSAN.

Les moyens de de communication COM_T sont en outre configurés pour recevoir (étape E214 sur la figure 6) le message de notification en provenance de la plateforme S_APP de notification, qui prévient d'une présentation d'une communication future destinée à l'identité non certifiée Abis.

Dans les modes de réalisation décrits ici, le serveur S a l'architecture matérielle d'un ordinateur, telle qu'illustrée à la figure 8.

L'architecture du serveur S comprend notamment un processeur 7, une mémoire vive 8, une mémoire morte 9, une mémoire flash non volatile 10 dans un mode particulier de réalisation, ainsi que des moyens de communication 11. De tels moyens sont connus en soi et ne sont pas décrits plus en détail ici.

La mémoire morte 9 du serveur S constitue un support d'enregistrement conforme à l'invention, lisible par le processeur 7 et sur lequel est enregistré ici un programme d'ordinateur ProgS conforme à l'invention.

La mémoire 10 du serveur S permet d'enregistrer des variables utilisées pour l'exécution des étapes du procédé d'établissement d'une communication tel que décrit précédemment. Ces variables comprennent par exemple une liste de numéros routables TSAN, les identités A et Abis du terminal T1 et l'identité B du terminal T2, le/les identifiant(s) technique(s) ID attribué(s) au terminal T1, l'information INFO sur la connexion du terminal T1, au moins une adresse d'un serveur SPN, et l'adresse de la plateforme S_APP. La mémoire 10 du serveur S permet également d'enregistrer une table de routage TPref, par exemple sur la base d'un préfixe d'un numéro, pour mettre en œuvre l'étape E126 décrite en référence à la figure 3bis et/ou l'étape E210 décrite en référence à la figure 6 afin de déterminer le meilleur équipement d'interconnexion à utiliser pour joindre ce numéro, par exemple lorsqu'une connexion à un serveur SPN n'est pas possible.

Le programme d'ordinateur Prog S définit des modules fonctionnels et logiciels, configurés ici pour établir une communication. Ces modules fonctionnels s'appuient sur et/ou commandent les éléments matériels 7-11 précités du serveur S.

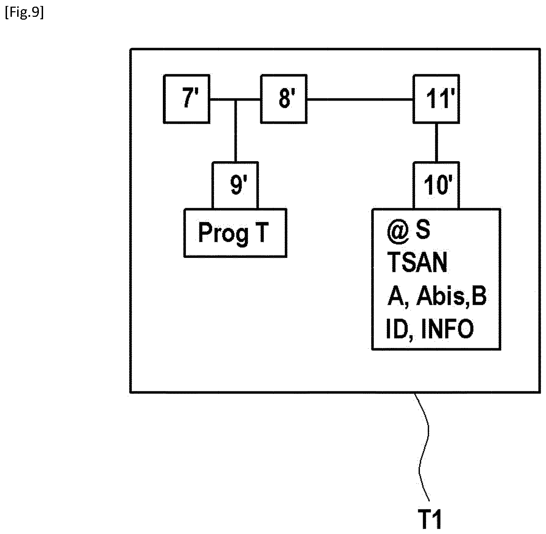

Dans les modes de réalisation décrits ici, le terminal T1 a l'architecture matérielle d'un ordinateur, telle qu'illustrée à la figure 9.

L'architecture du terminal T1 comprend notamment un processeur 7', une mémoire vive 8', une mémoire morte 9', une mémoire flash non volatile 10' dans un mode particulier de réalisation, ainsi que des moyens de communication 11'. De tels moyens sont connus en soi et ne sont pas décrits plus en détail ici.

La mémoire morte 9' du terminal T1 constitue un support d'enregistrement conforme à l'invention, lisible par le processeur 7' et sur lequel est enregistré ici un programme d'ordinateur Prog T conforme à l'invention.

La mémoire 10' du terminal T1 permet d'enregistrer des variables utilisées pour l'exécution des étapes du procédé de communication tel que décrit précédemment. Ces variables comprennent par exemple une adresse du serveur S, un numéro routable TSAN fourni par le serveur S, les identités A et Abis du terminal T1 et l'identité B du terminal T2, le/les identifiant(s) technique(s) ID attribué(s) au terminal T1, et l'information INFO sur la connexion du terminal T1.

Le programme d'ordinateur Prog T définit des modules fonctionnels et logiciels, configurés ici pour mettre en œuvre le procédé de communication. Ces modules fonctionnels s'appuient sur et/ou commandent les éléments matériels 7'-11' précités du terminal T1.

## Revendications

1. Procédé d'établissement d'une communication entre un premier et un deuxième terminal (T1, T2), ledit procédé étant mis en œuvre par un serveur (S) et comportant des étapes de :
- réception (E106), en provenance du premier terminal (T1) utilisant une première identité appelante (A), d'une requête comprenant une information sur une connexion (INFO) dudit premier terminal et un identifiant (ID) dudit premier terminal (T1) ;
- obtention (E108), à partir d'une base de données (BD) et en utilisant ledit identifiant (ID), d'un couple d'identités appelantes (A, Abis) dont une certifiée (A) et une non certifiée (Abis), le couple comprenant ladite première identité appelante (A) et une deuxième identité appelante (Abis) ;
- détermination (E110), à partir d'une desdites identités appelantes (A) et de l'information sur la connexion (INFO), d'un mode de connectivité dudit premier terminal (T1);
- détermination (E112), en fonction du mode de connectivité, d'un numéro routable (TSAN) associé au serveur (S), le serveur (S) étant configuré pour recevoir une communication à destination dudit numéro routable (S) émise par le premier terminal (T1) et pour router la communication vers le deuxième terminal (T2) en présentant une identité appelante (Abis) dudit couple (A, Abis); et
- envoi (E114) dudit numéro routable (TSAN) audit premier terminal (T1).

2. Procédé selon la revendication 1 dans lequel ladite requête comprend un numéro appelé (B), ledit procédé comprenant en outre :
- une étape (E118) d'enregistrement dans une mémoire, pour une durée donnée, du numéro appelé (B) en association avec ledit couple (A, Abis) ; et
- suite à une réception (E122) d'une communication émise avec la première identité appelante (A), une étape d'obtention (E124) du numéro appelé (B) et de la deuxième identité appelante (Abis) à partir de ladite mémoire ; et
- une étape de routage de la communication vers le numéro appelé (B) en présentant, selon un critère sélectionné par un utilisateur dudit premier terminal, la première (A) ou la deuxième identité appelante (Abis) dudit couple (A, Abis).

3. Procédé selon l'une quelconque des revendications 1 ou 2 dans lequel ledit mode de connectivité dudit premier terminal (T1) correspond à une connectivité du premier terminal à son réseau nominal ou à un réseau visité et/ou à une connectivité en technologie circuit ou en technologie VoIP.

4. Procédé selon l'une quelconque des revendications 1 à 3 dans lequel le mode de connectivité déterminé représente une connectivité du premier terminal à son réseau nominal, le numéro routable étant un numéro attribué dans la même zone géographique de tarification que celle du réseau nominal.

5. Procédé selon l'une quelconque des revendications 1 à 3 dans lequel le mode de connectivité déterminé représente une connectivité du premier terminal à un réseau visité en technologie circuit, le numéro routable étant un numéro attribué dans la même zone géographique de tarification que celle du réseau visité.

6. Procédé selon l'une quelconque des revendications 1 à 3 dans lequel le mode de connectivité déterminé représente une connectivité du premier terminal à un réseau visité en technologie VoIP selon un modèle d'itinérance de type LBO et sous un accord d'itinérance en VoIP entre les opérateurs des réseaux nominal et visité, le numéro routable étant un numéro attribué dans la même zone géographique de tarification que celle du réseau visité.

7. Procédé selon l'une quelconque des revendications 1 à 3 dans lequel le mode de connectivité déterminé représente une connectivité du premier terminal à un réseau visité en technologie VoIP selon un modèle d'itinérance de type S8HR et sous un accord d'itinérance en VoIP entre les opérateurs des réseaux nominal et visité, le numéro routable étant un numéro attribué dans la même zone géographique de tarification que celle du réseau nominal.

8. Procédé selon l'une quelconque des revendications 1 à 7 comprenant des étapes de :
- suite à une réception d'une communication destinée à l'identité non certifiée (Abis) du premier terminal (T1), recherche dans ladite base de données (BD) de cette identité non certifiée (Abis), et en cas de recherche positive :
- obtention de l'identité certifiée (A) associée dans ladite base de données (BD) à l'identité non certifiée (Abis) ;
- envoi à destination de l'identité certifiée (A) d'une notification alertant d'une future communication émise à destination de l'identité non certifiée (Abis), ladite notification comprenant le numéro appelant (B) de ladite communication ; et
- routage de la communication vers l'identité certifiée (A).

9. Procédé selon la revendication 8 comprenant en outre une étape de sélection d'un équipement d'interconnexion dans le pays dans lequel l'identité certifiée (A) est attribuée, l'équipement étant sélectionné à partir d'une table de routage et/ou d'une base de portabilité de type SPN, ladite communication étant routée via l'équipement d'interconnexion.

10. Procédé de communication mis en œuvre par un terminal (T1) et comportant des étapes de :
- envoi (F104) à un serveur (S) d'une requête comprenant une information sur une connexion (INFO) du terminal et un identifiant (ID) dudit terminal (T1);
- réception (F116) en provenance du serveur (S) d'un numéro routable (TSAN) sur lequel le terminal (T1) peut envoyer une communication audit serveur (S), la communication étant routée vers un deuxième terminal (T2) en présentant une identité appelante (Abis) parmi un couple (A, Abis) d'identités appelantes associé audit identifiant (ID), le couple comprenant une identité appelante certifiée (A) et une identité non certifiée (Abis) dudit terminal (T1); et
- envoi (F120) d'une communication au numéro routable (TSAN).

11. Procédé selon la revendication 10 comprenant en outre des étapes de :
- réception d'une notification alertant d'une future communication sur un numéro (Abis), ladite notification comprenant le numéro appelant (B) de ladite communication ;
- sélection, pour le numéro appelant (B) et pour une durée donnée, de paramètres de présentation d'une communication ; et
- suite à une réception d'une communication dont le numéro appelant (B) est le numéro appelant contenu dans ladite notification, présentation de ladite communication selon les paramètres sélectionnés.

12. Programme d'ordinateur (Prog S; Prog T) comportant des instructions pour l'exécution des étapes d'un procédé selon l'une quelconque des revendications 1 à 9 ou 10 à 11, lorsque ledit procédé est exécuté par un ordinateur.

13. Serveur (S) configuré pour établir une communication entre un premier et un deuxième terminal (T1, T2), ledit serveur (S) comprenant :
- des moyens de communication (COM_S) configurés pour recevoir, en provenance du premier terminal (T1) utilisant une première identité appelante (A), une requête comprenant une information sur une connexion (INFO) dudit premier terminal et un identifiant (ID) dudit premier terminal (T1);
- un module (OBT_AAbis) d'obtention, à partir d'une base de données (BD) et en utilisant ledit identifiant (ID), d'un couple d'identités appelantes (A, Abis) dont une certifiée (A) et une non certifiée (Abis), le couple comprenant ladite première identité appelante (A) et une deuxième identité appelante (Abis) ;
- un module (OBT_CX) de détermination, à partir d'une desdites identités appelantes (A) et de l'information sur la connexion (INFO), d'un mode de connectivité dudit premier terminal (T1); et
- un module (OBT_TSAN) de détermination, en fonction du mode de connectivité, d'un numéro routable (TSAN) associé au serveur (S), le serveur (S) étant configuré pour recevoir une communication à destination dudit numéro routable (S) émise par le premier terminal (T1) et pour router la communication vers le deuxième terminal (T2) en présentant une identité appelante (Abis) dudit couple (A, Abis);
- les moyens de communication étant configurés pour envoyer ledit numéro routable (TSAN) audit premier terminal (T1).

14. Terminal (T1) comprenant des moyens de communication (COM_T) configurés pour :
- envoyer à un serveur (S) une requête comprenant une information sur une connexion (INFO) du terminal et un identifiant (ID) dudit terminal (T1);
- recevoir en provenance du serveur (S) un numéro routable (TSAN) sur lequel le terminal (T1) peut envoyer une communication audit serveur (S), la communication étant routée vers un deuxième terminal (T2) en présentant une identité appelante (Abis) d'un couple (A, Abis) associé audit identifiant (ID), le couple comprenant une identité appelante certifiée (A) et une identité appelante non certifiée (Abis) dudit terminal (T1); et
- envoyer une communication au numéro routable (TSAN).
